(19) **Europäisches Patentamt / European Patent Office / Office européen des brevets**

(11) **EP 4 344 869 A1**

(12) **EUROPEAN PATENT APPLICATION**

(43) Date of publication:
**03.04.2024 Bulletin 2024/14**

(21) Application number: **22199165.6**

(22) Date of filing: **30.09.2022**

(51) International Patent Classification (IPC):
**B32B 27/00** (2006.01)   **C08F 210/16** (2006.01)
**C08J 5/18** (2006.01)   **C08L 23/08** (2006.01)

(52) Cooperative Patent Classification (CPC):
(C-Sets available)
**C08F 210/16; B32B 27/00; C08J 5/18;**
**C08L 23/0815;** C08J 2323/08; C08J 2423/08;
C08L 2205/02; C08L 2205/025; C08L 2205/03

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **BURYAK, Andrey**
**4021 Linz (AT)**
• **SUMERIN, Victor**
**02510 Oitmäki, Kirkkonummi (FI)**

(74) Representative: **Kador & Partner Part mbB**
**Corneliusstraße 15**
**80469 München (DE)**

(54) **MULTIMODAL ETHYLENE COPOLYMER COMPOSITION AND FILMS COMPRISING THE SAME**

(57)    The present invention relates to a multimodal ethylene copolymer composition comprising 5 to 25 wt.%, relative to the total weight of the multimodal ethylene copolymer composition, of a first ethylene copolymer (A1) comprising a copolymer of ethylene and at least a first $\alpha$-olefin comonomer, with a density as determined according to ISO 1183-187 ranging from 920 to 960 kg/m$^3$; 15 to 35 wt.%, relative to the total weight of the multimodal ethylene copolymer composition, of a second ethylene copolymer (A2) comprising a copolymer of ethylene and at least the first $\alpha$-olefin comonomer, with a density as determined according to ISO 1183-187 ranging from 920 to 960 kg/m$^3$; 40 to 80 wt.%, relative to the total weight of the multimodal ethylene copolymer composition, of a third ethylene copolymer (B) comprising a copolymer of ethylene and at least the first and a second $\alpha$-olefin comonomer; wherein said third ethylene copolymer (B) has a higher weight-average molecular weight (Mw) than said first ethylene copolymer (A1) and said second ethylene copolymer (A2); wherein the composition has a density as determined according to ISO 1183-187 in the range of from 915 to 930 kg/m$^3$; an MFR$_5$, determined according to ISO1133, in a range of from 0.5 to 5.0 g/10min; and wherein a content of the second $\alpha$-olefin comonomer in said third ethylene copolymer (B) is in a range of from 15 to 85 % based on the total comonomer content on mol basis in said third ethylene copolymer (B). A process for preparing the composition and films comprising the composition are also disclosed.

EP 4 344 869 A1

(52) Cooperative Patent Classification (CPC): (Cont.)

C-Sets
**C08F 210/16, C08F 2/001;**
**C08F 210/16, C08F 4/025;**
**C08F 210/16, C08F 4/6492;**
**C08F 210/16, C08F 4/6555;**
**C08L 23/0815, C08L 23/0815, C08L 23/0815;**
C08F 210/16, C08F 210/08, C08F 210/14,
C08F 2500/12, C08F 2500/04, C08F 2500/17,
C08F 2500/26, C08F 2500/27;
C08F 210/16, C08F 210/08, C08F 210/14,
C08F 2500/12, C08F 2500/36;
C08F 210/16, C08F 210/08, C08F 2500/12;
C08F 210/16, C08F 210/08, C08F 2500/12,
C08F 2500/07;
C08F 210/16, C08F 210/14, C08F 210/08,
C08F 2500/12, C08F 2500/04, C08F 2500/17,
C08F 2500/26, C08F 2500/27;
C08F 210/16, C08F 210/14, C08F 210/08,
C08F 2500/12, C08F 2500/36

**Description**

**Field of the Invention**

The present invention is directed to a multimodal ethylene copolymer composition, a process for producing the multimodal ethylene copolymer composition and films comprising said multimodal ethylene copolymer composition and/or obtainable by the mentioned process. In particular, the present invention is directed to a multimodal ethylene copolymer composition and films comprising the multimodal ethylene polymer with an excellent balance of properties between impact resistance, tensile modulus and optical properties.

**Background**

Linear low density polyethylene polymers (LLDPE) are used in a variety of applications. In particular, films for packaging applications are a highly relevant market for LLDPE. In order to protect the content of a package, it is desired that the films have good or even excellent mechanical properties, such as a high tensile modulus and/or high impact resistance. Excellent mechanical properties also allow to produce thinner films, which reduces the amount of the polymer used to obtain the film.

Moreover, it is well known that films produced from LLDPE grades with high haze values exhibit a very special look, which is appreciated in specific market segments.

Therefore, there is the need to develop LLDPE polymers which have even higher impact resistance, while keeping tensile modulus and/or haze values of films made of such LLDPE polymers on a high level.

In particular, it is known to produce ethylene copolymers suitable for producing films by copolymerizing ethylene in two polymerization stages, for instance from EP-A-691367 which discloses bimodal ethylene copolymers produced in two fluidized bed reactors.

Also WO-A-20040009 discloses bimodal low density PE resins. The document does not disclose multimodal ethylene polymer composition produced in three polymerisation stage.

EP-A-2067799 discloses multimodal LLDPE resins which have been produced in two polymerization stages in a loop and a gas phase reactor in the presence of a ligand-modified catalyst. The document does not disclose a third polymerization stage.

EP-A-2246369 discloses LLDPE produced in the presence of a Ziegler-Natta catalyst with specific halogenated aluminum alkyl compounds as a cocatalyst. While the document briefly refers to two-stage polymerization its examples are one-stage polymerization runs. The document does not disclose any three-stage polymerization.

WO 2015/086812 (EP2883887) describes a process for making multimodal ethylene copolymers where the method comprises polymerising ethylene and comonomers in three polymerisation stages, and further use of said copolymers for making films. The ethylene copolymer produced according to the process has the density of 906 to 925 $kg/m^3$ and MFRs (190 °C, 5.0 kg load, 1501133) of 0.5 to 5.0 g/10 min. The copolymer produced in the first polymerisation stage and the first copolymer mixture being a mixture of the first polymer and polymer produced in the second stage have claimed densities in the range of 945 to 955 $kg/m^3$. WO2020/136166 A1 relates to a process for producing multimodal ethylene polymer film compositions and focuses on impact properties of films comprising the same.

WO2020/136164 A1 relates to multilayered films comprising ethylene co- and/ or terpolymers. The document also emphasizes the importance of mechanical, more specifically impact, properties.

Thus, it is evident that there is still a need to provide access to ethylene copolymer compositions suitable for film formation and/ or packaging applications, which exhibit excellent mechanical properties, such as dart drop impact and tensile modulus.

Moreover, it has now been found that there is a market need for ethylene copolymer compositions having not only excellent mechanical properties - which would allow for a reduction of film thickness - but meet, simultaneously, particular needs with regard to optical properties (haze, gloss, clarity).

It is an object of the present invention to satisfy said demand.

**Summary of the Invention**

In one aspect, the invention provides a multimodal ethylene copolymer composition comprising

- 5 to 25 wt.%, relative to the total weight of the multimodal ethylene copolymer composition, of a first ethylene copolymer (A1) comprising a copolymer of ethylene and at least a first $\alpha$-olefin comonomer, with a density ranging from 920 to 960 $kg/m^3$;

- 15 to 35 wt.%, relative to the total weight of the multimodal ethylene copolymer composition, of a second ethylene copolymer (A2) comprising a copolymer of ethylene and at least the first α-olefin comonomer, with a density ranging from 920 to 960 kg/m$^3$;

- from 40 to 80 wt.%, relative to the total weight of the multimodal ethylene copolymer composition, of a third ethylene copolymer (B) comprising a copolymer of ethylene and at least the first and a second α-olefin comonomer;

wherein said third ethylene copolymer (B) has a higher weight-average molecular weight (Mw) than said first ethylene copolymer (A1) and said second ethylene copolymer (A2); wherein the composition has a density in the range of from 915 to 930 kg/m$^3$; an MFR$_5$, determined according to ISO1133, in a range of from 0.5 to 5.0 g/10min; and wherein a content of the second α-olefin comonomer in said third ethylene polymer (B) is in a range of from 15 to 85 % based on the total comonomer content on mol basis in said third ethylene copolymer (B) as determined according to quantitative $^{13}$C-NMR spectroscopy analysis.

In another aspect, the invention provides a process for producing the multimodal ethylene copolymer composition and comprising the steps of:

(a) polymerising in a first polymerisation step ethylene and at least a first α-olefin comonomer to produce a first ethylene copolymer (A1);

(b) polymerising in a second polymerisation step ethylene and at least the first α-olefin comonomer in the presence of said first ethylene copolymer (A1) to produce a first ethylene copolymer mixture (PEM1) comprising said first ethylene copolymer (A1) and a second ethylene copolymer (A2), and

(c) polymerising in a third polymerisation step ethylene, the first and a second α-olefin comonomer in the presence of said first ethylene copolymer mixture (PEM1), to produce a second ethylene copolymer mixture (PEM2) comprising the first ethylene copolymer mixture (PEM1) and a third ethylene copolymer (B),

(d) extruding said second ethylene copolymer mixture (PEM2) to obtain said multimodal ethylene copolymer composition.

In yet another aspect, the invention provides a film comprising the multimodal ethylene copolymer composition and/or obtainable by the mentioned process.

It has surprisingly been found that multimodal ethylene copolymer compositions as described herein are suitable for the production of films exhibiting improved impact properties, as evidenced by higher DDI values measured on films made of ethylene polymer compositions of the invention and yet exhibit desirable tensile and optical properties comparable to those obtainable from currently available commercial multimodal LLDPE polymers.

**Detailed description**

The present invention relates to a multimodal ethylene copolymer composition, a process for producing the same and to articles, especially films, comprising the multimodal ethylene copolymer composition and/or obtainable by the mentioned process.

**Multimodal ethylene copolymer composition**

The multimodal ethylene copolymer composition according to the present invention comprises from 5 to 25 wt.%, relative to the total weight of the multimodal ethylene copolymer composition, of a first ethylene copolymer (A1) comprising a copolymer of ethylene and at least a first α-olefin comonomer, with a density ranging from 920 to 960 kg/m$^3$; 15 to 35 wt.%, relative to the total weight of the multimodal ethylene copolymer composition, of a second ethylene copolymer (A2) comprising a copolymer of ethylene and at least the first α-olefin comonomer, with a density ranging from 920 to 960 kg/m$^3$; and from 40 to 80 wt.%, relative to the total weight of the multimodal ethylene copolymer composition, of a third ethylene copolymer (B) comprising a copolymer of ethylene and at least the first and a second α-olefin comonomer wherein said third ethylene copolymer (B) has a higher weight-average molecular weight (Mw) than said first ethylene copolymer (A1) and said second ethylene copolymer (A2); wherein the composition has a density in the range of from 915 to 930 kg/m$^3$; an MFR$_5$, determined according to ISO1133, in a range of from 0.5 to 5.0 g/10min; and wherein a content of the second α-olefin comonomer in said third ethylene polymer (B) is in a range of from 15 to 85 % based on the total comonomer content on mol basis in said third ethylene copolymer (B) as determined according to quantitative $^{13}$C-NMR spectroscopy analysis.

The multimodal ethylene copolymer composition preferably has an MFR$_2$ as determined according to ISO1133

in a range of from 0.01 to 0.5 g/10min, preferably of from 0.1 to 0.4 g/10min and more preferably of from 0.15 to 0.30 g/10min.

The multimodal ethylene copolymer composition preferably has an MFR5 as determined according to ISO1133 in a range of from 0.5 to 3.0 g/10min, more preferably of from 0.6 to 2.0 g/10min and even more preferably of from 0.7 to 1.5 g/10min.

The multimodal ethylene copolymer composition preferably has an $MFR_{21}$ as determined according to ISO1133 in a range of from 5 to 40 g/10min, more preferably of from 10 to 30 g/10min and even more preferably of from 15 to 28 g/10min.

The multimodal ethylene copolymer composition preferably has a density of from 918 to 925 $kg/m^3$.

$MFR_2$, $MFR_5$, $MFR_{21}$ and density ranges as indicated above relate to the multimodal ethylene copolymer composition after extrusion into pellets.

The multimodal ethylene copolymer composition preferably has a number average molecular weight (Mn) in a range of from 8 to 14 kg/mol; a weight average molecular weight (Mw) in a range of from 150 to 200 kg/mol; and a z-average molecular weight (Mz) in a range of from 750 to 1000 kg/mol; determined by GPC.

Moreover, the multimodal ethylene copolymer composition preferably has a ratio $M_W/M_n$ ranging from 10 to 25 and/or a ratio Mz/Mw ranging from 4 to 10 (calculated on the basis of GPC measurements, as described in the experimental section below). More preferably, the multimodal ethylene copolymer composition has a ratio Mw/Mn in a range of from 10 to 20 and/or a ratio Mz/Mw of 4 to 8.

The multimodal ethylene copolymer composition preferably has a polydispersity index (PI) in a range of from 2.0 to 3.0 $Pa^{-1}$, more preferably of from 2.25 to 2.50 $Pa^{-1}$ and/or a shear thinning index (SHI 2,7/210) in a range of from 25 to 40, more preferably from 30 to 35; PI and SHI being determined via rheological measurements as detailed in the experimental section.

The multimodal ethylene copolymer composition preferably has an overall comonomer content as determined according to quantitative $^{13}$C-NMR spectroscopy analysis, as detailed in the experimental section, in a range of from 1.5 to 5.0 mol%, more preferably in a range of from 2.5 to 3.9 mol%. According to a particularly preferred embodiment, the multimodal ethylene copolymer composition comprises the first $\alpha$-olefin comonomer, more preferably 1-butene in an amount of from 0.5 to 4.5 mol% as determined according to quantitative $^{13}$C-NMR spectroscopy analysis and/or the second $\alpha$-olefin comonomer, more preferably 1-hexene, in an amount of from 0.5 to 4.5 mol% as determined according to quantitative $^{13}$C-NMR spectroscopy analysis.

**First ethylene copolymer (A1)**

The first ethylene copolymer (A1) is a copolymer of ethylene and at least a first $\alpha$-olefin comonomer. It forms from 5 to 25 wt.%, preferably from 10 to 20 wt.%, relative to the total weight of the multimodal ethylene copolymer composition, of the multimodal ethylene copolymer composition. The first $\alpha$-olefin comonomer may preferably be selected from $\alpha$-olefin comonomers having from 3 to 10 carbon atoms. More preferably, the first $\alpha$-olefin comonomer is selected from 1-butene, 1-hexene and 1-octene; even more preferably, the first $\alpha$-olefin comonomer is 1-butene. According to a particularly preferred embodiment of the invention, the first ethylene copolymer (A1) is a copolymer of ethylene and 1-butene.

The first ethylene copolymer (A1) preferably has an $MFR_2$ as determined according to ISO1133 in a range of from 50 to 600 g/10min, preferably of from 100 to 400 g/10min.

The first ethylene copolymer (A1) has a density ranging from 920 to 960 $kg/m^3$, and more preferably from 940 to 955 $kg/m^3$.

**Second ethylene copolymer (A2)**

The second ethylene copolymer (A2) is a copolymer of ethylene and at least the first $\alpha$-olefin comonomer. It forms from 15 to 35 wt.%, preferably from 20 to 30 wt.%, relative to the total weight of the multimodal ethylene copolymer composition, of the multimodal ethylene copolymer composition. The first $\alpha$-olefin comonomer is the same as in the first ethylene copolymer (A1) and may preferably be selected from $\alpha$-olefin comonomers having from 3 to 10 carbon atoms. More preferably, the first $\alpha$-olefin comonomer is selected from 1-butene, 1-hexene and 1-octene; even more preferably, the first $\alpha$-olefin comonomer is 1-butene. According to a particularly preferred embodiment of the invention, the second ethylene copolymer (A2) is a copolymer of ethylene and 1-butene.

The second ethylene copolymer (A2) preferably has an $MFR_2$ as determined according to ISO1133 in a range of from 50 to 600 g/10min, preferably of from 100 to 400 g/10min.

The second ethylene copolymer (A2) has a density ranging from 920 to 960 $kg/m^3$, and more preferably from 940 to 955 $kg/m^3$.

The first ethylene copolymer (A1) and the second ethylene copolymer (A2) and, optionally, a further polymer fraction from an optional prepolymerisation step, are comprised in a first ethylene copolymer mixture (PEM1).

The overall comonomer content of said first ethylene copolymer mixture (PEM1) preferably is in a range of from 0.5 to 3.0 mol%.

**Third ethylene copolymer (B)**

The third ethylene copolymer (B) comprises a copolymer of ethylene and the first and a second $\alpha$-olefin comonomer. It forms from 40 to 80 wt.%, preferably from 50 to 70 wt.%, relative to the total weight of the multimodal ethylene copolymer composition, of the multimodal ethylene copolymer composition. The first $\alpha$-olefin comonomer is the same as in the first ethylene copolymer (A1) and the second ethylene copolymer (A2) above. The second $\alpha$-olefin comonomer is, on the other hand, preferably selected from $\alpha$-olefin comonomers having from 3 to 10 carbon atoms. More preferably, the second $\alpha$-olefin comonomer is selected from 1-butene, 1-hexene and 1-octene. More preferably, the third ethylene copolymer (B) comprises 1-butene as the first $\alpha$-olefin comonomer and/or 1-hexene as the second $\alpha$-olefin comonomer. Even more preferably, the third ethylene copolymer (B) is a terpolymer of ethylene, 1-butene and 1-hexene. In this embodiment, the multimodal ethylene copolymer composition comprises an amount of 1-butene as from 0.5 to 5.0 mol-% as determined according to quantitative $^{13}$C NMR spectroscopy analysis and/or an amount of 1-hexene as from 0.5 to 4.0 mol-% as determined according to quantitative $^{13}$C NMR spectroscopy analysis.

The total comonomer content in said third ethylene copolymer (B), as determined according to quantitative $^{13}$C-NMR spectroscopy analysis, is preferably between 1 and 10 mol%, more preferably between 2 and 8 mol%, even more preferably between 3 and 7 mol%.

The second $\alpha$-olefin comonomer is preferably comprised in the third ethylene copolymer (B) in an amount of from 15 to 85 %, preferably from 20 to 83 %, even more preferably from 25 to 80 % based on the total comonomer content on mol basis in the third ethylene copolymer (B) as determined according to quantitative $^{13}$C-NMR spectroscopy analysis.

According to a particularly preferred embodiment, said third ethylene copolymer (B) is a terpolymer of ethylene, 1-butene and 1-hexene, wherein 1-hexene is comprised in an amount of from 25 to 80% based on a total comonomer content on mol basis in the third ethylene copolymer (B) as determined according to quantitative $^{13}$C-NMR spectroscopy analysis, and wherein the total comonomer content in said third ethylene copolymer (B), determined according to quantitative $^{13}$C-NMR spectroscopy analysis, is between 3 and 7 mol%.

The third ethylene copolymer (B) has a higher weight-average molecular weight (Mw) than said first ethylene copolymer (A1) and said second ethylene copolymer (A2).

The first ethylene copolymer mixture (PEM1) and the third ethylene copolymer (B) are comprised in a second ethylene copolymer mixture (PEM2). Preferably, the first ethylene copolymer mixture (PEM1) and the third ethylene copolymer (B) make up a second ethylene copolymer mixture (PEM2).

The second ethylene copolymer mixture (PEM2) preferably has an $MFR_2$ as determined according to ISO1133 in a range of from 0.01 to 0.5 g/10min, more preferably of from 0.1 to 0.4 g/10min and even more preferably of from 0.15 to 0.30 g/10min.

The second ethylene copolymer mixture (PEM2) preferably has an MFRs as determined according to ISO1133 in a range of from 0.1 to 2.0 g/10min, more preferably of from 0.5 to 1.5 g/10min and even more preferably of from 0.7 to 1.2 g/10min.

The second ethylene copolymer mixture (PEM2) preferably has an $MFR_{21}$ as determined according to ISO1133 in a range of from 5 to 40 g/10min, more preferably of from 10 to 30 g/10min and even more preferably of from 15 to 27 g/10min.

The second ethylene copolymer mixture (PEM2) preferably has a density of from 900 to 940 kg/m$^3$, more preferably of from 910 to 930 kg/m$^3$ and even more preferably of from 915 to 925 g/10min.

**Polymerisation process**

The present process for producing a multimodal ethylene copolymer composition as described herein above comprises the steps of:

(a) polymerising in a first polymerisation step ethylene and at least a first $\alpha$-olefin comonomer to produce a first ethylene copolymer (A1);

(b) polymerising in a second polymerisation step ethylene and at least the first $\alpha$-olefin comonomer in the presence of said first ethylene copolymer (A1) to produce a first ethylene copolymer mixture (PEM1) comprising said first ethylene copolymer (A1) and a second ethylene copolymer (A2), and

(c) polymerising in a third polymerisation step ethylene, the first and a second α-olefin comonomer in the presence of said first ethylene copolymer mixture (PEM1), to produce a second ethylene copolymer mixture (PEM2) comprising the first ethylene copolymer mixture (PEM1) and a third ethylene copolymer (B),

(d) extruding said second ethylene copolymer mixture (PEM2) to obtain said multimodal ethylene copolymer composition.

Preferably, steps (a), (b) and (c) of the process are carried out in the presence of a Ziegler-Natta polymerisation catalyst.

The first and the second α-olefin comonomer used in steps (a), (b) and (c) may be selected independently from α-olefins having from 3 to 10 carbon atoms and their mixtures. Especially suitable α-olefins are those having from 4 to 8 carbon atoms, including their mixtures. In particular 1-butene, 1-hexene and 1-octene and their mixtures are the preferred α-olefins. The first α-olefin comonomer used in steps (a), (b) and (c) is the same, while the second α-olefin comonomer is different from the first α-olefin comonomer. The polymerisation steps may be connected in any order, i.e. the first polymerisation step may precede the second polymerisation step, or the second polymerisation step may precede the first polymerisation step or, alternatively, polymerisation steps may be connected in parallel.

However, it is preferred to operate the polymerisation steps in cascaded mode.

## Catalyst

As already pointed out above, polymerisation steps (a), (b) and (c) of the process for producing the multimodal ethylene copolymer composition described herein, are preferably carried out in the presence of a Ziegler-Natta polymerisation catalyst.

Ziegler Natta catalysts are useful as they can produce polymers within a wide range of molecular weight and other desired properties with a high productivity. Ziegler Natta catalysts used in the present invention are preferably supported on an external support.

Suitable Ziegler Natta catalysts preferably contain a magnesium compound, an aluminum compound and a titanium compound supported on a particulate support.

The particulate support typically used in Ziegler-Natta catalysts comprises an inorganic oxide support, such as silica, alumina, titania, silica-alumina and silica-titania or a $MgCl_2$ based support. The catalyst used in the present invention is supported on an inorganic oxide support. Most preferably the Ziegler-Natta catalyst used in the present invention is supported on silica. The average particle size of the silica support can be typically from 10 to 100 μm. However, it has turned out that special advantages can be obtained if the support has an average particle size from 15 to 30 μm, preferably from 18 to 25 μm. Alternatively, the support may have an average particle size of from 30 a 80 μm, preferably from 30 to 50 μm. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminum compound is chlorine containing aluminum alkyl. Especially preferred compounds are aluminum alkyl dichlorides, aluminum dialkyl chlorides and aluminum alkyl sesquichlorides.

The transition metal is preferably titanium. The titanium compound is a halogen containing titanium compound, preferably chlorine containing titanium compound. Especially preferred titanium compound is titanium tetrachloride. The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

The Ziegler Natta catalyst is used together with an activator, which is also called as cocatalyst. Suitable activators are metal alkyl compounds, typically Group 13 metal alkyl compounds, and especially aluminum alkyl compounds. They include trialkylaluminum compounds, such as trimethylaluminum, triethylaluminum, tri-isobutylaluminum, trihexylaluminum and tri-n-octylaluminum. Aluminum alkyl compounds may also include alkyl aluminum halides, such as ethylaluminum dichloride, diethylaluminum chloride, ethylaluminum sesquichloride, dimethylaluminum chloride and the like and alkylaluminum oxy-compounds, such as methylaluminumoxane, hexaisobutylaluminumoxane and tetraisobutylaluminumoxane and also other aluminum alkyl compounds, such as isoprenylaluminum. Especially preferred cocatalysts are trialkylaluminums, of which triethylaluminum, trimethylaluminum and tri-isobutylaluminum are particularly preferred.

The amount in which the activator is used depends on the specific catalyst and activator. Typically triethylaluminum is used in such amount that the molar ratio of aluminum to the transition metal, like Al/Ti, is for example from 1 to 1000, preferably from 3 to 100 and in particular from about 5 to about 30 mol/mol.

**Prepolymerisation**

In addition to the actual polymerisation steps (a), (b) and (c), i.e. in addition to the at least three polymerisation steps, the process may comprise a prepolymerisation step preceding the actual polymerisation steps. The purpose of the prepolymerisation is to polymerise a small amount of polymer onto the catalyst at a low temperature and/or a low monomer concentration. By prepolymerisation it is possible to improve the performance of the catalyst. The prepolymerisation step is conducted in slurry.

Thus, the prepolymerisation step may be conducted in a loop reactor. The prepolymerisation is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerisation step is typically from 0 to 90 °C, preferably from 20 to 80 °C and more preferably from 55 to 75 °C. The pressure is not critical and is typically from 1 to 150 bar, preferably from 40 to 80 bar.

The amount of monomer is typically such that from about 0.1 to 1000 grams of monomer per one gram of solid catalyst component is polymerised in the prepolymerisation step. As the person skilled in the art knows, the catalyst particles recovered from a continuous prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additive may be used to prevent the particles from adhering to each other or the walls of the reactor, as disclosed in WO-A-96/19503 and WO-A-96/32420.

If a prepolymerisation step is used, it is preferred that the prepolymer is ethylene copolymer. Any prepolymer component is regarded as part of the first ethylene copolymer (A1). When determining the split, MFR, density etc. of the first polymer therefore the prepolymer is regarded as a part of the first ethylene copolymer (A1).

The catalyst components are preferably all (separately or together) introduced to the prepolymerisation step when a prepolymerisation step is present. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce cocatalyst into the prepolymerisation stage that a sufficient polymerisation reaction is obtained therein.

Typically, the amounts of hydrogen and comonomer are adjusted so that the presence of the prepolymer has no effect on the properties of the final multimodal polymer. Especially, it is preferred that melt flow rate of the prepolymer is greater than the melt flow rate of the final polymer but smaller than the melt flow rate of the polymer produced in the first polymerisation stage, i.e. the first ethylene copolymer (A1). It is further preferred that the density of the prepolymer is greater than the density of the final polymer. Suitably the density is approximately the same as or greater than the density of the polymer produced in the first polymerisation stage, i.e. the first ethylene copolymer (A1). Further, typically the amount of the prepolymer is not more than about 5% by weight of the multimodal ethylene copolymer composition, it is more preferred when it is not more than 2% by weight of the multimodal ethylene copolymer composition.

**Step (a) for producing a first ethylene copolymer (A1)**

Step (a) of the process comprises polymerising, in a first polymerisation reactor, ethylene and a first $\alpha$-olefin comonomer to produce a first ethylene copolymer (A1).

In step (a), the first copolymer of ethylene (A1) is produced. The first ethylene copolymer (A1) has a density ranging from 920 to 960 kg/m$^3$ and, preferably, a melt flow rate MFR$_2$ as determined according to IS01133 of from 50 to 600 g/10 min.

The catalyst may be transferred into the first polymerisation step by any means known in the art. It is thus possible to suspend the catalyst in a diluent and maintain it as homogeneous slurry. Especially preferred it is to use oil having a viscosity form 20 to 1500 mPas as diluent, as disclosed in WO-A-2006/063771. It is also possible to mix the catalyst with a viscous mixture of grease and oil and feed the resultant paste into the first polymerisation step. Further still, it is possible to let the catalyst settle and introduce portions of thus obtained catalyst mud into the first polymerisation step in a manner disclosed, for instance, in EP-A-428054. The first polymerisation step may also be preceded by a prepolymerisation step as described hereinabove, in which case the mixture withdrawn from the prepolymerisation step is directed into the first polymerisation step (a).

Into the first polymerisation step ethylene (a), a first α-olefin, optionally an inert diluent, and optionally hydrogen are introduced. Hydrogen and the first α-olefin are introduced in such amounts that the melt flow rate $MFR_2$ and the density of the first ethylene copolymer (A1) are in the desired values. Preferably, the first α-olefin is as defined above having from 3 to 10 carbon atoms.In particular 1-butene, 1-hexene and 1-octene are the preferred α-olefins. It is particularly preferred that the first α-olefin comonomer is 1-butene.

The polymerisation of the first polymerisation step (a) may be conducted in slurry. Then the polymer particles formed in the polymerisation, together with the catalyst fragmented and dispersed within the particles, are suspended in the fluid hydrocarbon. The slurry is agitated to enable the transfer of reactants from the fluid into the particles.

The polymerisation usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to about 50 % by mole, preferably from about 1.5 to about 20 % by mole and in particular from about 2 to about 15 % by mole. The benefit of having a high ethylene concentration is that the productivity of the catalyst is increased but the drawback is that more ethylene then needs to be recycled than if the concentration was lower.

The slurry polymerisation may be conducted in any known reactor used for slurry polymerisation. Such reactors include a continuous stirred tank reactor and a loop reactor. It is especially preferred to conduct the polymerisation of step (a) in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. If the first ethylene copolymer (A1) is produced in conditions where the ratio of the first α-olefin to ethylene is not more than about 400 mol/kmol, such as not more than 300 mol/kmol, then it is usually advantageous to conduct the slurry polymerisation above the critical temperature and pressure of the fluid mixture. Such operation is described in US-A-5391654.

When the first polymerisation step (a) is conducted as slurry polymerization, it is conducted at a temperature within the range of from 50 to 115 °C, preferably from 70 to 110 °C and in particular from 80 to 105 °C. The pressure in the first polymerisation step (a) is then from 1 to 300 bar, preferably from 40 to 100 bar, more preferably from 50 to 80 bar.

The amount of hydrogen is adjusted based on the desired melt flow rate of the first ethylene copolymer (A1) and it depends on the specific catalyst used. For many generally used Ziegler-Natta catalysts the molar ratio of hydrogen to ethylene is from 10 to 2000 mol/kmol, preferably from 100 to 1000 mol/kmol and in particular from 150 to 800 mol/kmol.

The amount of the first α-olefin is adjusted based on the desired density of the first ethylene copolymer (A1) and it, too, depends on the specific catalyst used. For many generally used Ziegler-Natta catalysts the molar ratio of the first α-olefin to ethylene is from 100 to 1000 mol/kmol, preferably from 150 to 600 mol/kmol.

The polymerisation of step (a) may also be conducted in gas phase. A preferable embodiment of gas phase polymerisation reactor is a fluidised bed reactor. There the polymer particles formed in the polymerisation are suspended in upwards moving gas. The gas is introduced into the bottom part of the reactor. The upwards moving gas passes the fluidized bed wherein a part of the gas reacts in the presence of the catalyst and the unreacted gas is withdrawn from the top of the reactor. The gas is then compressed and cooled to remove the heat of polymerisation. To increase the cooling capacity it is sometimes desired to cool the recycle gas to a temperature where a part of the gas condenses. After cooling the recycle gas is reintroduced into the bottom of the reactor. Fluidised bed polymerisation reactors are disclosed, among others, in US-A-4994534, US-A-4588790, EP-A-699213, EP-A-628343, FI-A-921632, FI-A-935856, US-A-4877587, FI-A-933073 and EP-A-75049.

According to the preferred embodiment of present invention, the polymerisation of the first polymerisation step (a) is conducted in slurry. Further, suitably the polymerisation is conducted at a temperature exceeding the critical temperature of the fluid mixture and pressure exceeding the critical pressure of the fluid mixture.

According to the invention at least a first α-olefin comonomer is present in the first polymerisation step (a), where the polymer produced in the first step is the first ethylene copolymer (A1). The polymerisation is preferably conducted as a slurry polymerisation in liquid diluent at a temperature of from 50 °C to 115 °C, such as from 70 to 115 °C and a pressure of from 1 bar to 300 bar, such as from 40 to 100 bar, like from 50 to 80 bar. The molar ratio of the first α-olefin to ethylene is then from 100 to 1000 mol/kmol, and preferably from 150 to 600 mol/kmol, and most preferably from 180 to 400 mol/kmol. Then the molar ratio of hydrogen to ethylene is suitably from 10 to 2000 mol/kmol, preferably from 100 to 1000 mol/kmol, and more preferably from 150 to 800 mol/kmol. $MFR_2$ of the first ethylene copolymer (A1) produced in the first polymerisation step (a) as determined according to ISO1133 is preferably within the range 50 to 600 g/10 min.

The polymerisation rate in the first polymerisation step (a) is suitably controlled to achieve the desired amount of the first ethylene copolymer (A1) in the multimodal ethylene copolymer composition. The polymerisation rate is suitably controlled by adjusting the ethylene concentration in the first polymerisation step (a).

When the first polymerisation step is conducted as slurry polymerisation in the loop reactor the mole fraction of ethylene in the reaction mixture is suitably from 2 to 10 % by mole and preferably from 3 to 8 % by mole.

**Step (b) for producing a second ethylene copolymer (A2)**

The second ethylene copolymer (A2) is produced in a second polymerisation step (b) in the presence of the first ethylene copolymer (A1).

The polymerisation may be conducted in slurry, gas phase or solution. In the second polymerisation step (b) the second copolymer of ethylene (A2) is produced in the presence of the first copolymer of ethylene (A1). Hence, the polymer produced as a result of the second polymerization step (b) is a mixture of the first (A1) and the second (A2) ethylene copolymer, i.e. the first ethylene copolymer mixture (PEM1).

The density of the second ethylene copolymer (A2) ranges from 920 to 960 kg/m$^3$ and, preferably, a melt flow rate $MFR_2$ as determined according to IS01133 of from 50 to 600 g/10 min.

The first ethylene copolymer (A1) is transferred from the first polymerisation step (a) to the second polymerisation step (b) by using any method known to the person skilled in the art. If the first polymerisation step (a) is conducted as slurry polymerisation in a loop reactor, it is advantageous to transfer the slurry from the first polymerisation step (a) to the second polymerisation step (b) by means of the pressure difference between the first polymerisation step (a) and the second polymerisation step (b).

Into the second polymerisation step (b), ethylene, the first $\alpha$-olefin comonomer, optionally an inert diluent, and optionally hydrogen are introduced. Hydrogen and the $\alpha$-olefin, are introduced in such amounts that the density and, preferably, the melt flow rate $MFR_2$ of the second ethylene copolymer (A2) are within the desired values.

The first $\alpha$-olefin comonomer used in the second polymerisation step (b) for producing the second ethylene copolymer (A2) is the same as the first $\alpha$-olefin comonomer used in the first polymerisation step (a) for producing the first ethylene copolymer (A1).

The polymerisation of the second polymerisation step (b) may be conducted in slurry in the same way as it was discussed above for the first polymerisation step (a).

The polymerisation of the second polymerisation step (b) may also be conducted in gas phase in the same way as was discussed above for the first polymerisation step (a). Preferably the second polymerisation step (b) is conducted in slurry phase as described above.

When the second polymerisation step (b) is conducted as slurry polymerization, as in the first polymerization step (a), it is conducted at a temperature within the range of from 50 to 115 °C, preferably from 70 to 110 °C and in particular from 80 to 105 °C. The pressure in the first polymerisation step (a) is then from 1 to 300 bar, preferably from 40 to 100 bar, more preferably from 50 to 80 bar.

The molar ratio of hydrogen to ethylene is suitably from 10 to 2000 mol/kmol, preferably from 100 to 1000 mol/kmol and in particular from 150 to 800 mol/kmol in the second polymerisation step (b).

Further, suitably the polymerisation is conducted at a temperature exceeding the critical temperature of the fluid mixture and pressure exceeding the critical pressure of the fluid mixture.

The density of the second ethylene copolymer (A2) is controlled by the molar ratio of the first $\alpha$-olefin to ethylene in the second polymerisation step (b). The molar ratio of the $\alpha$-olefin to ethylene is then from 50 to 1000 mol/kmol, preferably from 200 to 900 mol/kmol, and most preferably from 400 to 800 mol/kmol in the second polymerisation step (b).

The polymerisation rate in the second polymerisation step (b) is suitably controlled to achieve the desired amount of the second ethylene copolymer (A2) in the multimodal ethylene copolymer composition.

The polymerisation rate is suitably controlled by adjusting the ethylene concentration in the second polymerisation step (b). When the second polymerisation step is conducted as slurry polymerisation in the loop reactor the mole fraction of ethylene in the reaction mixture is suitably from 1 to 10 % by mole and preferably from 2 to 6 % by mole.

As indicated above the melt flow rate $MFR_2$ of the second ethylene copolymer (A2) as determined according to IS01133 is preferably in the range of from 50 to 600 g/10 min.

**Step (c) for producing a third ethylene copolymer (B)**

The third ethylene copolymer (B) is produced in a third polymerisation step (c) in the presence of the first ethylene copolymer mixture (PEM1). The polymer obtained as a result of the third polymerization step is hence the second ethylene copolymer mixture (PEM2).

Into the third polymerisation step (c), along with the first ethylene copolymer mixture (PEM1), are introduced ethylene, at least the first $\alpha$-olefin comonomer, a second $\alpha$-olefin comonomer, hydrogen and optionally an inert diluent.

The polymerisation in third polymerisation step (c) is preferably conducted at a temperature within the range of from 50 to 100 °C, preferably from 60 to 100 °C and in particular from 70 to 95 °C. The pressure in the third polymerisation step (c) is for example from 1 to 300 bar, preferably from 5 to 100 bar.

The polymerisation in the third polymerisation step (c) may be conducted in slurry. The polymerisation may then be conducted along the lines as was discussed above for the first and second polymerisation steps.

The amount of hydrogen in the third polymerisation step (c) is adjusted for achieving the desired melt flow rate of the third ethylene copolymer (B). The molar ratio of hydrogen to ethylene depends on the specific catalyst used. For many generally used Ziegler Natta catalysts the molar ratio of hydrogen to ethylene is for example from 0 to 50 mol/kmol, preferably from 3 to 35 mol/kmol.

Furthermore, the amount of $\alpha$-olefin comonomers preferably having from 3 to 10 carbon atoms is adjusted to reach the targeted density. The ratio of the $\alpha$-olefin (sum of $\alpha$-olefins) to ethylene depends on the type of the catalyst and the type of the $\alpha$-olefin(s). The ratio is typically for example from 100 to 1000 mol/kmol, preferably from 150 to 800 mol/kmol. Since more than one $\alpha$-olefin is used, the ratio of the $\alpha$-olefin to ethylene is the ratio of the sum of all the $\alpha$-olefins to ethylene.

The $\alpha$-olefin comonomers are preferably selected from $\alpha$-olefins having from 3 to 10 carbon atoms or mixtures thereof. In particular 1-butene, 1-hexene and 1-octene and their mixtures are the preferred $\alpha$-olefins, especially preferred are 1-butene and 1-hexene.

The content of the second $\alpha$-olefin comonomer in the third ethylene copolymer (B) is in a range of from 15 to 85 % based on the total comonomer content on mol basis in the third ethylene copolymer (B).

As previously noted, it is preferred that the third ethylene copolymer (B) comprises at least two, ideally only two, comonomers. It is particularly preferred that these are 1-butene and 1-hexene. That is to say, it is even more particularly preferred that the first $\alpha$-olefin comonomer is 1-butene and the second $\alpha$-olefin comonomer is 1-hexene.

The polymerisation in the third polymerisation step (c) may be, and preferably is, conducted in gas phase. In gas phase polymerisation using a Ziegler Natta catalyst hydrogen is typically added in such amount that the ratio of hydrogen to ethylene is for example from 3 to 100 mol/kmol, preferably from 4 to 50 mol/kmol for obtaining the desired melt index of the third ethylene copolymer (B). The amount of $\alpha$-olefins having from 3 to 10 carbon atoms is adjusted to reach the targeted density of the third ethylene copolymer (B). The ratio of the $\alpha$-olefin to ethylene is typically from 100 to 1000 mol/kmol, preferably from 150 to 800 mol/kmol, more preferably from 200 to 500 mol/kmol. Since more than one $\alpha$-olefin is used the ratio of the $\alpha$-olefin to ethylene is the ratio of the sum of all the $\alpha$-olefins to ethylene.

The gas phase reactor preferably is a vertical fluidised bed reactor. There the polymer particles formed in the polymerisation are suspended in upwards moving gas. The gas is introduced into the bottom part of the reactor. The upwards moving gas passes the fluidised bed wherein a part of the gas reacts in the presence of the catalyst and the unreacted gas is withdrawn from the top of the reactor. The gas is then compressed and cooled to remove the heat of polymerisation. To increase the cooling capacity it is sometimes desired to cool the recycle gas to a temperature where a part of the gas condenses. After cooling the recycle gas is reintroduced into the bottom of the reactor. Fluidised bed polymerisation reactors are disclosed, among others, in US-A-4994534, US-A-4588790, EP-A-699213, EP-A-628343, FI-A-921632, FI-A-935856, US-A-4877587, FI-A-933073 and EP-A-75049.

When the first (a) or the second (b) polymerisation step is conducted in slurry and the third polymerisation step (c) is conducted in gas phase, the polymer is suitably transferred from the first (a) or the second (b) polymerisation step into the third polymerisation step (c) as described in EP-A-1415999. The procedure described in paragraphs [0037] to [0048] of EP-A-1415999 provides an economical and effective method for product transfer.

The conditions in the third polymerisation step (c) are adjusted so that the third ethylene copolymer (B) has $MFR_2$, $MFR_5$, $MFR_{21}$ and density in the desired ranges as set out above.

The polymerisation rate in the third polymerisation step (c) is suitably controlled to achieve the desired amount of the third ethylene copolymer (B) in the second ethylene copolymer mixture (PEM2) and the multimodal ethylene copolymer composition, respectively. Preferably the final multimodal ethylene copolymer composition contains from 40 to 80 % by weight, more preferably 50 to 70 %by weight of the third ethylene copolymer (B). The polymerisation rate is suitably controlled by adjusting the ethylene concentration in the third polymerisation step (c). When the third polymerisation step (c) is conducted in gas phase the mole fraction of ethylene in the reactor gas is suitably from 3 to 50 % by mole and preferably from 5 to 25 % by mole.

In addition to ethylene, comonomer and hydrogen the gas also comprises an inert gas. The inert gas can be any gas which is inert in the reaction conditions, such as a saturated hydrocarbon having from 1 to 5 carbon atoms, nitrogen or a mixture of the above-mentioned compounds. Suitable hydrocarbons having from 1 to 5 carbon atoms are methane, ethane, propane, n-butane, isobutane, n-pentane, isopentane and mixtures thereof.

*Post Reactor Treatment*

When the second ethylene copolymer mixture (PEM2) has been removed from the polymerisation reactor it is subjected to process steps for removing residual hydrocarbons from the polymer. Such processes are well known in the art and can include pressure reduction steps, purging steps, stripping steps, extraction steps and so on. Also combinations of different steps are possible.

According to one preferred process a part of the hydrocarbons is removed from the polymer powder by reducing the pressure. The powder is then contacted with steam at a temperature of from 90 to 110 °C for a period of from 10 minutes to 3 hours. Thereafter the powder is purged with inert gas, such as nitrogen, over a period of from 1 to 60 minutes at a temperature of from 20 to 80 °C.

According to another preferred process the polymer powder is subjected to a pressure reduction as described above. Thereafter it is purged with an inert gas, such as nitrogen, over a period of from 20 minutes to 5 hours at a temperature of from 50 to 90 °C. The inert gas may contain from 0.0001 to 5 %, preferably from 0.001 to 1 %, by weight of components for deactivating the catalyst contained in the polymer, such as steam.

The purging steps are preferably conducted continuously in a settled moving bed. The polymer moves downwards as a plug flow and the purge gas, which is introduced to the bottom of the bed, flows upwards.

Suitable processes for removing hydrocarbons from polymer are disclosed in WO-A-02/088194, EP-A-683176, EP-A-372239, EP-A-47077 and GB-A-1272778.

After the removal of residual hydrocarbons the polymer is preferably mixed with additives as it is well known in the art to form a polymer composition. Such additives include antioxidants, process stabilisers, neutralisers, lubricating agents, nucleating agents, pigments and so on.

The polymer particles are mixed with additives and extruded to pellets as it is known in the art. Preferably a counter-rotating twin screw extruder is used for the extrusion step. Such extruders are manufactured, for instance, by Kobe and Japan Steel Works. A suitable example of such extruders is disclosed in EP-A-1600276. Typically the specific energy input (SEI) is during the extrusion within the range of from 100 to 230 kWh/ton. The melt temperature is typically from 220 to 290 °C.

**Film**

The film according to the present invention comprises the multimodal ethylene copolymer composition, preferably in an amount of at least 90 wt.%, more preferably at least 95 wt.% of the film, and most preferably the film consists of the multimodal copolymer composition. In addition to the multimodal ethylene copolymer composition the film may also contain antioxidants, process stabilizers, slip agents, pigments, UV-stabilizers and other additives known in the art.

Examples of stabilizers are hindered phenols, hindered amines, phosphates, phosphites and phosphonites. Examples of pigments are carbon black, ultramarine blue and titanium dioxide. Examples of other additives are e. g. clay, talc, calcium carbonate, calcium stearate, zinc stearate and antistatic additives like. The additives can be added as single components or as part of a masterbatch as is known in the art.

Suitable antioxidants and stabilizers are, for instance, 2,6-di-tert-butyl-p-cresol, tetrakis-[methylene-3-(3',5-di-tert-butyl-4'hydroxyphenyl)propionate] methane, octadecyl-3-3(3'5'-di-tertbutyl-4'-hydroxyphenyl)propionate, dilauryl thiodipropionate, distearylthiodipropionate, tris- (nonylphenyl)phosphate, distearyl-pentaerythritol-diphosphite and tetrakis(2,4-di-tertbutylphenyl)-4,4'-biphenylene-diphosphonite.

Some hindered phenols are sold under the trade names of Irganox 1076 and Irganox 1010 or commercially available blends thereof, like Irganox B561. Commercially available blends of antioxidants and process stabilizers are also available, such as Irganox B225 marketed by Ciba-Geigy.

Suitable acid scavengers are, for instance, metal stearates, such as calcium stearate and zinc stearate. They are used in amounts generally known in the art, typically from 300 ppm to 10000 ppm and preferably from 400 to 5000 ppm.

The polymer composition of the invention can be provided in the form of powder or pellets, preferably pellets.

Pellets are obtained by conventional extrusion, granulation or grinding techniques and are an ideal form of the polymer of the invention because they can be added directly to converting machinery. Pellets are distinguished from polymer powders where particle sizes are less than 1 mm. The use of pellets ensures that the composition of the invention is capable of being converted in a film, e.g. monolayer film, by the simple in line addition of the pellets to the converting machinery.

The multimodal ethylene copolymer compositions of the invention allow the formation of films exhibiting a good balance of mechanical and optical properties. The composition can be extruded to films according to any method known in the art. The film preparation process steps of the invention are known and may be carried out in a film line in a manner known in the art, such as flat film extrusion or blown film extrusion. Well known film lines are commercially available, for example from Windmôller & Hôlscher, Reifenhauser, Hosokawa Alpine etc.

Importantly, the ethylene polymer compositions of the invention have extraordinary processing properties. Multimodality, especially trimodality, of the polyethylene film composition of the invention makes it very well suited for making films. Benefits can be seen in excellent extrudability and especially in the clearly higher throughput in the film making machinery than corresponding film materials having the same level of density and MFR. The high throughput is not achieved at the expense of good mechanical properties.

The films of the invention may be monolayer films or the polymer composition of the invention is used to form a layer within a multilayer film. A film comprising the ethylene polymer composition of the invention and being a multilayer film is preferred.

Any film of the invention may have a thickness of 3 to 1000 um, preferably 5 to 500 mm, more preferably 10 to 250 $\mu$m, still more preferably 10 to 150 $\mu$m, such as e.g. 10 to 100 $\mu$m, or even 10 to 60 $\mu$m. Selected thickness is dependent on the needs of the desired end application.

The compositions produced according to the process of the present invention are suitable for making blown films. The films of the invention can be manufactured using simple in line addition of the polymer pellets to an extruder. For film formation using a polymer mixture it is important that the different polymer components be intimately mixed prior to extrusion and blowing of the film as otherwise there is a risk of inhomogeneity, e.g. gels, appearing in the film.

Thus, it is especially preferred to thoroughly blend the components, for example using a twin screw extruder, preferably a counter- rotating extruder prior to extrusion and film blowing.

Sufficient homogeneity can also be obtained by selecting the screw design for the film extruder such that it is designed for good mixing and homogenizing. The film of the invention is a blown film. Blown films are typically produced by extrusion through an annular die, blowing into a tubular film by forming a bubble which is collapsed between nip rollers after solidification. This film can then be slit, cut or converted (e.g. gusseted) as desired. Conventional film production techniques may be used in this regard. Typically the composition will be extruded at a temperature in the range 160°C to 240°C, and cooled by blowing gas (generally air) at a temperature of 10 to 50°C to provide a frost line height of 1 or 2 to 8 times the diameter of the die. The blow up ratio (BUR) should generally be in the range 1.5 to 4, e.g. 2 to 4, preferably 2.5 to 3.

The films of the invention exhibit high dart impact strengths and tear strengths, especially in the machine direction. In the passages which follow, certain parameters are given based on a specific film thickness. This is because variations in thickness of the film cause a change to the size of the parameter in question so to obtain a quantitative value, a specific film thickness is quoted. This does not mean that the invention does not cover other film thicknesses rather it means that when formulated at a given thickness, the film should have the given parameter value.

Thus, for a 40 $\mu$m blown film manufactured as described below and at maximum output, the film may have a dart drop impact (DDI), determined according to ISO 7765-1 "method A", ranging from 300 g to 900 g, preferably from 350 g to 700 g. Furthermore, the film preferably has a tensile modulus in machine direction (MD) ranging from 150 MPa to 500 MPa, more preferably from 200 to 350 MPa and/or a tensile modulus in transverse direction (TD) ranging from 250 to 500 MPa, more preferably from 270 to 400 MPa (ISO 527-3).

In addition to the excellent mechanical properties, the film comprising the multimodal ethylene copolymer composition of the invention has beneficial optical properties.

In particular, the film has preferably a haze determined according to ASTM D1003 on 40 $\mu$m blown films produced as indicated below ranging from 50 to 95%, more preferably from 60 to 90%, and most preferably from 70 to 80%. Furthermore, it is also preferred that the film has a clarity determined according to ASTM D1003 on 40 $\mu$m blown films produced as indicated below ranging from 5 to 20%, more preferably from 10 to 18%.

Likewise, the film preferably has a gloss value in machine direction (MD) ranging from 5.0 to 15.0 GU (gloss units), preferably from 5.5 to 10.0 GU (gloss units); and a gloss value in transverse direction (TD) ranging from 5.5 to 15.0 GU (gloss units), preferably from 5.8 to 10.0 GU (gloss units), measured at an angle of 45° according to ASTM D 2457 on 40 $\mu$m blown films.

Overall, it has surprisingly been found that the multimodal ethylene copolymer composition according to the invention allows for the production of films with desirable optical and tensile properties, and additionally exhibiting significantly improved impact properties.

## Examples

### Methods

The following methods were used to measure the properties that are defined generally above and in the examples below. Unless otherwise stated, film samples used for the measurements and definitions were prepared as described under the heading "Film Sample Preparation".

*MFR*

MFR was measured according to ISO 1133 at 190 °C. The load has been indicated as a subscript, i.e. $MFR_2$ indicates that the measurement has been carried out under a load of 2.16 kg, $MFR_5$ indicates that the measurement has been carried out under a load of 5 kg, and $MFR_{21}$ denotes the measurement has been carried out under a load of 21.6 kg, respectively.

MFR values can be determined on samples as explained above or calculated, for example in a way well known in the art, from MFR values determined on samples as explained above, especially for example, the MFR value for the third ethylene copolymer (B) can be calculated based on a measured MFR value for the first ethylene copolymer mixture (PEM1), a measured MFR value for the second ethylene copolymer mixture (PEM2) and the respective amounts of PEM1 and third (B) ethylene copolymers.

An MFR value for the third ethylene copolymer (B) can be calculated for example based on a logarithmic mixture rule, as for example given by:

$$\log MFR_{PEM2} = w_{PEM1} \times \log MFR_{PEM1} + w_B \times \log MFR_B$$

*Density*

Density was measured according to ISO 1183-187. Sample preparation was done by compression moulding in accordance with ISO 1872-2:2007. In case it was not possible to measure the density of a specific fraction directly, it was calculated assuming linear mixing rule and knowing the split between the respective fractions.

*Molecular weights and molecular weight distribution*

GPC method was used to determine the molecular weight averages (Mn, Mw and Mz) and the ratio of Mw/Mn (PDI) and the molecular weight distribution. Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) using the following formulas:

$$M_n = \frac{\sum_{i=1}^{N} A_i}{\sum_{i=1}^{N} (A_i/M_i)} \qquad (1)$$

$$M_w = \frac{\sum_{i=1}^{N} (A_i \times M_i)}{\sum_{i=1}^{N} A_i} \qquad (2)$$

$$M_z = \frac{\sum_{i=1}^{N} (A_i \times M_i^2)}{\sum_{i=1}^{N} (A_i \times M_i)} \qquad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

$$K_{PP} = 19 \times 10^{-3} \text{ mL/g}, \quad \alpha_{PP} = 0.725$$

A third order polynomial fit was used to fit the calibration data.

All samples were prepared in the concentration range of 0,5 - 1 mg/ml and dissolved at 160 °C for 3 hours under continuous gentle shaking.

*Comonomer content - quantitative $^{13}$C-NMR spectroscopy analysis*

Quantification of microstructure by NMR spectroscopy

Quantitative nuclear-magnetic resonance (NMR) spectroscopy was used to quantify the comonomer content of the polymers.

Quantitative 13C{1H} NMR spectra recorded in the molten-state using a Bruker Avance III 500 NMR spectrometer operating at 500.13 and 125.76 MHz for 1H and 13C respectively. All spectra were recorded using a 13C optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme {fillip05,griffin07}. A total of 1024 (1k) transients were acquired per spectra.

Quantitative 13C{1H} NMR spectra were processed, integrated and relevant quantitative properties determined from the integrals. All chemical shifts are internally referenced to the bulk methylene signal ($\delta+$) at 30.00 ppm and assignments done according to {randall89} .

The amount of ethylene was quantified using the integral of the methylene ($\delta+$) sites at 30.00 ppm accounting for the number of reporting sites per monomer:

$$E = I\,\delta+ \,/\, 2$$

Characteristic signals resulting from saturated end-groups were observed. The content of such saturated end-groups was quantified using the average of the integral of the signals at 22.8 [I2S]and 32.2 ppm [I3S] assigned to the 2s and 3s sites respectively:

$$S = (1/2)*( I2S + I3S )$$

The presence of comonomer units is corrected for based on the number of comonomer units and saturated end-groups present:

$$E_{total} = E + (3/2)*B + (3/2)*BB + (5/2)*BEB + (2/2)*H + (3/2)*S$$

B and H are defined for their respective comonomers. Correction for consecutive and non-consecutive comonoer incorporation, when present, is undertaken in a similar way.

Characteristic signals corresponding to the incorporation of 1-butene were observed and the comonomer fraction calculated as the fraction of 1-butene in the polymer with respect to all monomer in the polymer.

The amount isolated 1-butene incorporated in EEBEE sequences was quantified using the integral of the *B2 sites at 39.9 ppm accounting for the number of reporting sites per comonomer:

$$B = I*B2$$

If present the amount consecutively incorporated 1-butene in EEBBEE sequences was quantified using the integral of the □□B2B2 site at 39.4 ppm accounting for the number of reporting sites per comonomer:

$$BB = 2 * I\alpha B2B2$$

If present the amount non consecutively incorporated 1-butene in EEBEBEE sequences was quantified using the integral of the □□B2B2 site at 24.8 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I*B2 - 2 * I\beta\beta B2B2$$

Sequences of BBB were not observed. The total 1-butene content was calculated based on the sum of isolated, consecutive and non consecutively incorporated 1-butene:

$$Btotal = B + BB + BEB$$

The mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer.
The amount isolated 1-hexene incorporated in EEHEE sequences was quantified using the integral of the *B4 sites at 38.3 ppm accounting for the number of reporting sites per comonomer:

$$H = I*B4$$

The total 1-hexene content was calculated from only isolated incorporated 1-hexene:

$$Htotal = H$$

The mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

Further details on the method can be found in: J. Randall, Macromol. Sci., Rev. Macromol. Chem. Phys. 1989, C29, 201; Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Pollard, M., Klimke, K., Graf, R., Spiess, H.W., Wilhelm, M., Sperber, O., Piel, C., Kaminsky, W., Macromolecules 2004;37:813; Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198; Castignolles, P., Graf, R., Parkinson, M., Wilhelm, M., Gaborieau, M., Polymer 50 (2009) 2373.

*Dynamic Shear Measurements (frequency sweep measurements)*

*Elasticity index (EI) and Shear Thinning Index (SHI)*

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \quad (1)$$

If the applied strain is within the linear viscoelastic regime, the resulting sinusoidal stress response can be given by

$$\sigma(t) = \sigma_0 \sin(\omega t + \delta) \quad (2)$$

where

$\sigma_0$ and $\gamma_0$ are the stress and strain amplitudes, respectively;

$\omega$ is the angular frequency;

$\delta$ is the phase shift (loss angle between applied strain and stress response);

t is the time.

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta''$ and the loss tangent, tan $\delta$ which can be expressed as follows:

$$G' = \frac{\sigma_0}{\gamma_0} \cos \delta \; [Pa] \quad (3)$$

$$G'' = \frac{\sigma_0}{\gamma_0} \sin \delta \; [Pa] \quad (4)$$

$$G^* = G' + iG'' [Pa] \quad (5)$$

$$\eta^* = \eta' - \eta'' [Pa.s] \quad (6)$$

$$\eta' = \frac{G''}{\omega} \; [Pa.s] \qquad (7)$$

$$\eta'' = \frac{G'}{\omega} \; [Pa.s] \qquad (8)$$

Besides the above mentioned rheological functions one can also determine other rheological parameters such as the so-called elasticity index EI(x). The elasticity index EI(x) is the value of the storage modulus, G' determined for a value of the loss modulus, G" of x kPa and can be described by equation 9.

$$EI(\chi) = G' \; for \; (G'' = \chi \; kPa) \; [Pa] \qquad (9)$$

For example, the EI(5kPa) is the defined by the value of the storage modulus G', determined for a value of G" equal to 5 kPa.

The determination of so-called Shear Thinning Indexes is done, as described in equation 10.

$$SHI(x/y) = \frac{eta^* for \; (G^*=x \; kPa)}{eta^* for \; (G^*=y \; kPa)} \; [Pa] \qquad (10)$$

For example, the SHI (2,7/210) is defined by the value of the complex viscosity, in Pa.s, determined for a value of G* equal to 2,7 kPa, divided by the value of the complex viscosity, in Pa.s, determined for a value of G* equal to 210 kPa.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus - *"Interpolate y-values to x-values from parameter"* and the *"logarithmic interpolation type"* were applied.

The polydispersity index, PI, PI=$10^5$/$G_C$, is calculated from the cross-over point of G'($\omega$) and G"($\omega$), for which G'($\omega$)=G"($\omega$)=$G_C$ holds.

Further details on the method can be found in *"Rheological characterization of polyethylene fractions"* Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362; *"The influence of molecular structure on some rheological properties of polyethylene"*, Heino, E.L., Borealis Polymers Oy, Porvoo, Finland, Annual Transactions of the Nordic Rheology Society, 1995; and *"Definition of terms relating to the non-ultimate mechanical properties of polymers"*, Pure & Appl. Chem., Vol. 70, No. 3, pp. 701-754, 1998.

*Tensile Modulus*

Tensile Modulus was measured in machine (MD) and transverse (TD) direction according to ISO 527-3 on blown film samples prepared as described under *"Film sample preparation"* herein below with film thickness of 40 $\mu$m and at a cross head speed of 1 mm/ min for the modulus.

*Dart drop impact (DDI)*

Dart drop impact (DDI) was measured on a blown film samples having a thickness of 40 microns using the ISO 7765-1 method.

*Haze and clarity*

Haze and clarity were measured according to ASTM D1003-00 on blown films having thickness of 40 micron produced as indicated below.

*Gloss*

Gloss was measured on blown films having thickness of 40 micron according to ASTM D 2457.

**Inventive Example 1 (IE1)**

A loop reactor having a volume of 50 dm$^3$ was operated at a temperature of 70 °C and a pressure of 57 bar. Into the reactor were fed ethylene, propane diluent and hydrogen so that the feed rate of ethylene was 2.0 kg/h, of 1-butene 109 g/h and of hydrogen was 5 g/h. Also a solid polymerisation catalyst component produced as described above and in Example 1 of EP 1378528 was introduced into the reactor together with triethylaluminum cocatalyst so that the molar ratio of Al/Ti was about 15. The estimated production split was about 1.5 wt.%.

A stream of slurry was continuously withdrawn and directed to a loop reactor having a volume of 150 dm$^3$ and which was operated at a temperature of 85 °C and a pressure of 55 bar. Into the reactor were further fed additional ethylene, 1-butene comonomer, propane diluent and hydrogen so that the ethylene concentration in the fluid mixture was 4,3 % by mole, the hydrogen to ethylene ratio was 400 mol/kmol, the 1-butent to ethylene ratio was 280 mol/kmol and the fresh propane (diluent) feed was 72,4 kg/h. The estimated production split was 15 wt.%. The resulting copolymer had MFR$_2$ of 320 g/10 min and density of 953 kg/m$^3$.

A stream of slurry from the reactor was withdrawn intermittently and directed into a loop reactor having a volume of 350 dm$^3$ and which was operated at 85 °C temperature and 53 bar pressure. Into the reactor was further added a fresh propane, ethylene, 1-butene comonomer and hydrogen so that the ethylene concentration in the reaction mixture was 2,7 mol-% and the molar ratio of hydrogen to ethylene was 421 mol/kmol and the molar ratio of 1-butene to ethylene was 745 mol/kmol. The ethylene copolymer withdrawn from the reactor had MFR$_2$ of 480 g/10 min and density of 950 kg/m°. The estimated production split was 23,5 wt.%.

The slurry was withdrawn from the loop reactor intermittently and directed to a flash vessel operated at a temperature of 50 °C and a pressure of 3 bar. From there the polymer was directed to a fluidised bed gas phase reactor operated at a pressure of 20 bar and a temperature of 80 °C. Additional ethylene, 1-butene comonomer, 1-hexene comonomer, nitrogen as inert gas and hydrogen were added so that the ethylene content in the reaction mixture was 14.5 mol-%, the ratio of hydrogen to ethylene was 7,49 mol/kmol, the molar ratio of 1-butene to ethylene was 345 mol/kmol and the molar ratio of 1-hexene to ethylene was 65 mol/kmol. The polymer production split in the gas phase reactor was 60 wt.%.

The polymer powder was mixed under nitrogen atmosphere with 1200 ppm of Irganox B561 and 400 ppm Ca-stearate. Then it was compounded and extruded under nitrogen atmosphere to pellets by using a JSW CIMP90 twin screw extruder.

Tables 1 and 2 provide additional details on polymerisation conditions and polymer properties.

**IE2, CE1 and CE2**

The procedure of IE1 was repeated by changing reactor conditions as described in Table 1.

Tables 1 and 2 summarize polymerisation conditions and material properties for the inventive and comparative examples.

**Table 1**

|  | CE1 | CE2 | IE1 | IE2 |
|---|---|---|---|---|
| **Prepoly reactor** |  |  |  |  |
| Temperature (°C) | 70 | 70 | 70 | 70 |
| Pressure (bar) | 58 | 58 | 58 | 57 |
| Split (wt.-%) | 1.4 | 1.4 | 1.5 | 1.4 |
| **First loop reactor (A1)** |  |  |  |  |
| Temperature (°C) | 85 | 85 | 85 | 85 |
| Pressure (bar) | 55 | 55 | 55 | 55 |
| C2 conc. (mol-%) | 3.9 | 2.9 | 4.3 | 6.2 |
| H2/C2 ratio (mol/kmol) | 383 | 363 | 401 | 266 |
| C4/C2 ratio (mol/kmol) | 226 | 419 | 281 | 196 |
| Split (wt.-%) | 14.6 | 15.4 | 15.0 | 14.1 |
| Density (kg/m3) | 953 | 949 | 953 | 948 |

(continued)

| First loop reactor (A1) | | | | |
|---|---|---|---|---|
| MFR$_2$ (g/10 min) | 252 | 288 | 320 | 264 |
| **Second loop reactor (PEM1)** | | | | |
| Temperature (°C) | 85 | 85 | 85 | 85 |
| Pressure (bar) | 53 | 53 | 53 | 53 |
| C2 conc. (mol-%) | 2.4 | 3.3 | 2.7 | 3.7 |
| H2/C2 ratio (mol/kmol) | 355 | 280 | 422 | 277 |
| C4/C2 ratio (mol/kmol) | 689 | 614 | 745 | 585 |
| Split (wt.-%) | 23.3 | 22.4 | 23.5 | 23.9 |
| Density (kg/m3) | 951 | 949 | 950 | 951 |
| MFR$_2$ (g/10 min) | 274 | 160 | 480 | 264 |
| **GPR (PEM2)** | | | | |
| Temperature (°C) | 80 | 80 | 80 | 80 |
| Pressure (bar) | 20 | 20 | 20 | 20 |
| C2 conc. (mol-%) | 11.1 | 13.6 | 14.5 | 18.7 |
| H2/C2 ratio (mol/kmol) | 7.9 | 12.4 | 7.5 | 10.1 |
| C4/C2 ratio (mol/kmol) | 574.6 | 495.7 | 345.6 | 89.9 |
| C6/C2 ratio (mol/kmol) | 0.0 | 22.6 | 65.3 | 132.3 |
| Split (wt.-%) | 60.7 | 60.7 | 60.1 | 60.6 |
| Density (kg/m3) | 919 | 919 | 919 | 921 |
| MFR$_2$ (g/10 min) | 0.28 | 0.25 | 0.27 | 0.26 |
| MFR$_5$ (g/10 min) | 1.09 | 0.95 | 1.08 | 1.00 |
| MFR$_{21}$ (g/10 min) | 24.4 | 19.7 | 24.8 | 23.4 |
| **Powder** | | | | |
| Density (kg/m3) | 920.7 | 921.4 | 920.7 | 922.9 |
| MFR$_2$ (g/10 min) | 0.29 | 0.30 | 0.26 | 0.22 |
| MFR$_5$ (g/10 min) | 1.16 | 1.14 | 1.06 | 0.91 |
| MFR$_{21}$ (g/10 min) | 26.1 | 23.9 | 24.2 | 19.4 |
| **Pellet** | | | | |
| MFR$_2$ (g/10 min) | 0.28 | 0.30 | 0.28 | 0.23 |
| MFR$_5$ (g/10 min) | 1.14 | 1.14 | 1.14 | 0.95 |
| MFR$_{21}$ (g/10 min) | 25.5 | 24.8 | 26.1 | 21.8 |
| Density (kg/m3) | 920.7 | 921.7 | 921.6 | 923.2 |
| Mn (kg/mol) | 11.3 | 12.45 | 11.6 | 10.7 |
| Mw (kg/mol) | 171.5 | 170.0 | 173.0 | 174.5 |
| Mz (kg/mol) | 929.5 | 862.5 | 936.5 | 908.5 |
| Mw/Mn | 15.2 | 13.7 | 14.9 | 16.3 |

(continued)

| Pellet | | | | |
|---|---|---|---|---|
| Mz/Mw | 5.4 | 5.1 | 5.4 | 5.2 |
| PI (Pa$^{-1}$) | 2.49 | 2.22 | 2.45 | 2.37 |
| SHI 2.7/ 210 | 35.3 | 28.5 | 34.1 | 33.1 |
| C4 final (mol%) | 4.7 | 3.7 | 2.8 | 1.12 |
| C6 final (mol%) | 0 | 0.3 | 1.0 | 2.06 |

In order to calculate the properties of the B fraction, the PEM1 fraction was collected after the second loop reactor and analyzed (except for Mw and C4 content for CE2; in this case the average of the values for CE1, IE1 and IE2 was taken for the calculation, as process parameters were aimed to be the same or without a substantial difference after the second loop. Details are presented in Table 2 below). This allowed to calculate the properties of the third ethylene copolymer B, more specifically the content of the both comonomers and their relative ratio.

**Table 2**

| | CE 1 | CE2 | IE1 | IE2 |
|---|---|---|---|---|
| **PEM1** | | | | |
| MFR$_2$, g/10 min | 274 | 160 | 480 | 264 |
| Density, kg/m$^3$ | 951 | 949 | 950 | 951 |
| Split, wt.-% | 39.3 | 39.3 | 39.9 | 39.4 |
| Mw, kg/mol | 27.95 | 27.83* | 27.3 | 28.25 |
| C4, mol% | 1.1 | 1.14* | 1.13 | 1.19 |
| **Composition** | | | | |
| MFR$_2$ | 0.28 | 0.3 | 0.28 | 0.23 |
| Density, kg/m$^3$ | 920.7 | 921.7 | 921.6 | 923.2 |
| Mw, kg/mol | 171.5 | 170 | 173 | 174.5 |
| C4, mol% | 4.7 | 3.7 | 2.8 | 1.12 |
| C6, mol% | 0 | 0.3 | 1 | 2.06 |
| **Fraction B**** | | | | |
| MFR$_2$, g/10 min | 0.0074 | 0.0112 | 0.0046 | 0.0061 |
| Density, kg/m$^3$ | 901.1 | 904.0 | 902.7 | 905.1 |
| Split, wt.-% | 60.7 | 60.7 | 60.1 | 60.6 |
| Mw, kg/mol | 264.4 | 262.1 | 269.7 | 269.6 |
| C4 cont., mol% | 7.03 | 5.36 | 3.91 | 1.07 |
| C6 cont., mol% | 0 | 0.49 | 1.66 | 3.40 |
| (C4+C6), mol% | 7.03 | 5.85 | 5.57 | 4.47 |
| **B C6/(C4+C6), mol basis, %** | **0** | **8.4** | **29.9** | **76.0** |
| *Not measured directly. Average of the values for CE1, IE1 and IE2 were taken for the calculation. ** Values are calculated based on PEM1 and composition measured values. | | | | |

**Film preparation method**

The film samples have been produced on a small-scale laboratory blown film line from company COLLIN Lab & Pilot Solutions GmbH.

The line consists of an extruder with a Ø 30 mm screw with an L/D ration of 30. The extruder temperature has been set at 200°C, the melt temperature was 202°C and has been recorded after 45 min of process stabilization. The extruder is followed by a blow head which is equipped with a Ø 60 mm annular die with a die gap of 1.5 mm. The line has been run at a constant line speed of 7,5 m/min. The blow up ratio (BUR) of the film bubble was 2.5:1 and the frost line height was 120 mm. The film was produced with a thickness of 40 $\mu$m.

**Film sample preparation**

The blown film is wound to form reels which are followed by film cutting into respective dimension for further mechanical testing.

The compositions of CE, CE2, IE1 and IE2 were used in producing blown films according to the above film preparation method.

Film properties are given in Table 3.

**Table 3**

|  | CE1 | CE2 | IE1 | IE2 |
|---|---|---|---|---|
| MD tensile (MPa) | 238.7 | 240.6 | 226.6 | 272.5 |
| TD tensile (MPa) | 306.2 | 308.0 | 291.9 | 341.7 |
| DDI (g) | 238 | 250 | 408 | 480 |
| Haze (%) | 76.4 | 72.9 | 75.6 | 73.4 |
| Gloss 45° MD | 5.7 | 6.3 | 5.7 | 6.6 |
| Gloss 45° TD | 5.8 | 6.5 | 5.9 | 6.6 |
| Clarity (%) | 13.6 | 15.1 | 14.2 | 14.7 |

As evidenced by the above experimental results, the ethylene copolymer compositions of the present invention allow for the production of films with significantly improved dart drop impact. Importantly, optical properties of the films - such as haze, gloss and clarity - can be kept at the desired levels. Moreover, films obtained from the ethylene copolymer compositions of the present invention exhibit mechanical properties (tensile modulus) which are on the same or even on a better level than those of conventional ethylene polymer compositions. Thus, the present invention gives access to materials with a unique balance of properties, which are particularly well suited for packaging applications.

In particular, upon comparing the results from the Tables 2 and 3, one can clearly see the effect of the content of the second comonomer in the third copolymer fraction B on dart drop impact. CE1 has no second comonomer present in the B fraction and at the same time has a moderate DDI value of 238 g. CE2, while having 8.4 % of the second $\alpha$-olefin comonomer (on relative basis), still has a moderate DDI value of 250 g. However, once the relative proportion of the second comonomer is increased to 29.9 or even to 76% for IE1 and IE2 respectively, DDI is markedly increased to 408 and 480 g respectively. At the same time, mechanical and optical properties do not substantially change.

**Claims**

1. A multimodal ethylene copolymer composition comprising

    - 5 to 25 wt.%, relative to the total weight of the multimodal ethylene copolymer composition, of a first ethylene copolymer (A1) comprising a copolymer of ethylene and at least a first $\alpha$-olefin comonomer, with a density as determined according to ISO 1183-187 ranging from 920 to 960 kg/m$^3$;
    - 15 to 35 wt.%, relative to the total weight of the multimodal ethylene copolymer composition, of a second ethylene copolymer (A2) comprising a copolymer of ethylene and at least the first $\alpha$-olefin comonomer, with a density as determined according to ISO 1183-187 ranging from 920 to 960 kg/m$^3$;
    - 40 to 80 wt.%, relative to the total weight of the multimodal ethylene copolymer composition, of a third ethylene copolymer (B) comprising a copolymer of ethylene and at least the first and a second $\alpha$-olefin comonomer;

    wherein said third ethylene copolymer (B) has a higher weight-average molecular weight (Mw) than said first ethylene copolymer (A1) and said second ethylene copolymer (A2); wherein the composition has:

- a density as determined according to ISO 1183-187 in the range of from 915 to 930 kg/m$^3$;
- an MFR$_5$, determined according to IS01133, in a range of from 0.5 to 5.0 g/10min; and

wherein a content of the second $\alpha$-olefin comonomer in said third ethylene copolymer (B) is in a range of from 15 to 85 % based on the total comonomer content on mol basis in said third ethylene copolymer (B) as determined according to quantitative $^{13}$C-NMR spectroscopy analysis.

2. The multimodal ethylene copolymer composition according to claim 1, wherein the overall comonomer content in said multimodal ethylene copolymer composition as determined according to quantitative $^{13}$C-NMR spectroscopy analysis is between 1.5 and 5 mol%.

3. The multimodal ethylene copolymer composition according to anyone of the preceding claims,

wherein the first $\alpha$-olefin comonomer is selected from the group of alpha-olefins having between 3 to 10 carbon atoms, and is preferably 1-butene; and/or
the second $\alpha$-olefin comonomer is selected from the group of alpha-olefins having between 3 to 10 carbon atoms, and is preferably 1-hexene.

4. The multimodal ethylene copolymer composition according to claim 3, wherein the multimodal ethylene copolymer composition has the first $\alpha$-olefin comonomer as 1-butene in an amount of from 0.5 to 4.5 mol% as determined according to quantitative $^{13}$C-NMR spectroscopy analysis, and/or
the multimodal ethylene copolymer composition has the second $\alpha$-olefin comonomer as 1-hexene in an amount of from 0.5 to 4.5 mol% as determined according to quantitative $^{13}$C-NMR spectroscopy analysis.

5. The multimodal ethylene copolymer composition according to any of the preceding claims,
wherein the total comonomer content in said third ethylene copolymer (B) as determined according to quantitative $^{13}$C-NMR spectroscopy analysis ranges from 1 to 10 mol%.

6. The multimodal ethylene copolymer composition according to any of the preceding claims,
wherein the MFR$_2$ of the multimodal copolymer composition determined according to IS01133, is a range of from 0.01 to 0.5 g/10min.

7. The multimodal ethylene copolymer composition according to anyone of the preceding claims,
wherein the composition has a ratio $M_W/M_n$ ranging from 10 to 25 and/or a ratio Mz/Mw ranging from 4 to 10.

8. Process for producing the multimodal ethylene copolymer composition according to anyone of the preceding claims, comprising the steps of:

(a) polymerising in a first polymerisation step ethylene and at least a first $\alpha$-olefin comonomer to produce a first ethylene copolymer (A1);
(b) polymerising in a second polymerisation step ethylene and at least the first $\alpha$-olefin comonomer in the presence of said first ethylene copolymer (A1) to produce a first ethylene copolymer mixture (PEM1) comprising said first ethylene copolymer (A1) and a second ethylene copolymer (A2), and
(c) polymerising in a third polymerisation step ethylene, the first and a second $\alpha$-olefin comonomer in the presence of said first ethylene copolymer mixture (PEM1), to produce a second ethylene copolymer mixture (PEM2) comprising the first ethylene copolymer mixture (PEM1) and a third ethylene copolymer (B),
(d) extruding said second ethylene copolymer mixture (PEM2) to obtain said multimodal ethylene copolymer composition.

9. Process according to claim 8, wherein steps (a), (b) and (c) are carried out in the presence of a Ziegler-Natta polymerisation catalyst.

10. A film comprising the multimodal ethylene copolymer composition according to anyone of claims 1 to 7 and/or obtainable by a process according to anyone of claims 8 or 9.

11. The film according to claim 10 having a haze determined according to ASTM D1003 on a 40$\mu$m blown film, ranging from 50 to 95%, preferably from 60 to 90%, more preferably from 70 to 80%.

12. The film according to anyone of claims 10 or 11, having a dart drop impact (DDI), determined according to ISO 7765-1 "method A" on a 40μm blown film, ranging from 300g to 900g, preferably from 350g to 700g.

13. The film according to anyone of claims 10 to 12,

   having a tensile modulus in machine direction (MD), determined according to ISO 527-3 on a 40μm blown film, ranging from 150 to 500 MPa, and/or
   a tensile modulus in transverse direction (TD), determined according to ISO 527-3 on a 40μm blown film, ranging from 250 to 500 MPa.

14. The film according to anyone of the claims 10 to 13,
   having a clarity as determined according to ASTM D1003 on a 40μm blown film ranging from 5 to 20%, preferably from 10 to 18%.

15. The film according to anyone of claims 10 to 14 being a monolayer or multilayer film.

Europäisches
Patentamt

European
Patent Office

Office européen
des brevets

# EUROPEAN SEARCH REPORT

**Application Number**

EP 22 19 9165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/095788 A1 (BOREALIS AG [AT]) 31 May 2018 (2018-05-31) * page 3, lines 9-15 * * page 27, line 6; claim 1; examples IE1-5; table 1 * | 1-15 | INV. B32B27/00 C08F210/16 C08J5/18 C08L23/08 |
| X | EP 3 885 137 A1 (BOREALIS AG [AT]) 29 September 2021 (2021-09-29) * paragraphs [0010], [0062], [0077], [0078]; claim 1; example mLLDPE3; table 2 * | 1-8, 10-15 | |

|  |
|---|
| TECHNICAL FIELDS SEARCHED (IPC) |
| C08J B32B C08F C08L |

The present search report has been drawn up for all claims

| Place of search | Date of completion of the search | Examiner |
|---|---|---|
| Munich | 10 March 2023 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 9165

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2023

| Patent document cited in search report | | | Publication date | Patent family member(s) | | | Publication date |
|---|---|---|---|---|---|---|---|
| WO 2018095788 | A1 | | 31-05-2018 | CN | 109922960 | A | 21-06-2019 |
| | | | | CN | 109963713 | A | 02-07-2019 |
| | | | | EP | 3544814 | A1 | 02-10-2019 |
| | | | | EP | 3544815 | A1 | 02-10-2019 |
| | | | | KR | 20190079656 | A | 05-07-2019 |
| | | | | KR | 20190079657 | A | 05-07-2019 |
| | | | | RU | 2731614 | C1 | 07-09-2020 |
| | | | | RU | 2019117039 | A | 25-12-2020 |
| | | | | US | 2019300630 | A1 | 03-10-2019 |
| | | | | US | 2020010655 | A1 | 09-01-2020 |
| | | | | WO | 2018095788 | A1 | 31-05-2018 |
| | | | | WO | 2018095790 | A1 | 31-05-2018 |
| EP 3885137 | A1 | | 29-09-2021 | CN | 115335226 | A | 11-11-2022 |
| | | | | EP | 3885137 | A1 | 29-09-2021 |
| | | | | WO | 2021191021 | A1 | 30-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 691367 A
- WO 20040009 A
- EP 2067799 A
- EP 2246369 A
- WO 2015086812 A
- EP 2883887 A
- WO 2020136166 A1
- WO 2020136164 A1
- EP 688794 A
- WO 9951646 A
- WO 0155230 A
- WO 9619503 A
- WO 9632420 A
- WO 2006063771 A
- EP 428054 A
- US 4582816 A
- US 3405109 A
- US 3324093 A
- EP 479186 A
- US 5391654 A
- US 4994534 A
- US 4588790 A
- EP 699213 A
- EP 628343 A
- FI 921632 A
- FI 935856 A
- US 4877587 A
- FI 933073 A
- EP 75049 A
- EP 1415999 A
- WO 02088194 A
- EP 683176 A
- EP 372239 A
- EP 47077 A
- GB 1272778 A
- EP 1600276 A
- EP 1378528 A

### Non-patent literature cited in the description

- **J. RANDALL.** *Macromol. Sci., Rev. Macromol. Chem. Phys.,* 1989, vol. C29, 201
- **KLIMKE, K. ; PARKINSON, M. ; PIEL, C. ; KAMIN-SKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **HEINO, E.L. ; LEHTINEN, A. ; TANNER J. ; SEP-PÄLÄ, J. ; NESTE OY.** Rheological characterization of polyethylene fractions. *Porvoo, Finland, Theor. Appl. Rheol., Proc. Int. Congr. Rheol,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995
- Definition of terms relating to the non-ultimate mechanical properties of polymers. *Pure & Appl. Chem.,* 1998, vol. 70 (3), 701-754